Europäisches Patentamt

(19) European Patent Office

Office européen des brevets

(11) Publication number: **0 364 859 B1**

(12) **EUROPEAN PATENT SPECIFICATION**

(45) Date of publication of patent specification: **05.01.94**　(51) Int. Cl.⁵: **C08L 15/00,** C08L 9/02, C08L 77/00

(21) Application number: **89118768.4**

(22) Date of filing: **10.10.89**

(54) **Vulcanizable rubbery compositions.**

(30) Priority: **13.10.88 US 257059**

(43) Date of publication of application:
**25.04.90 Bulletin 90/17**

(45) Publication of the grant of the patent:
**05.01.94 Bulletin 94/01**

(84) Designated Contracting States:
**BE DE FR GB IT NL**

(56) References cited:
**EP-A- 0 251 791**
**EP-A- 0 251 792**

**R.G.C.P., vol. 48, no. 11, 1971; F.S. TOLSTUK-
HINA and N.N. KOLESNIKOVA: "Propriétés
de vulcanisats à base d'associations de
caoutchouc butadiène-nitrile acrylique et de
polyamide", pages 1239-1242**

(73) Proprietor: **POLYSAR LIMITED**
**1265 Vidal Street S.**
**Sarnia Ontario N7T 7M2(CA)**

(72) Inventor: **Plaumann, Heinz Peter Paul**
**1242 Sherwood Trail**
**Sarnia Ontario, N7V 2H6(CA)**

(74) Representative: **von Kreisler, Alek,**
**Dipl.-Chem. et al**
**Patentanwälte**
**von Kreisler-Selting-Werner**
**Postfach 10 22 41**
**D-50462 Köln (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention provides vulcanizable rubbery compositions comprising a polyamide, a partially hydrogenated nitrile rubber and curatives for the partially hydrogenated nitrile rubber. The partially hydrogenated nitrile rubber is obtained by the selective hydrogenation of a base nitrile rubber. The compositions exhibit good heat stability and are not grossly discoloured by the mixing process which is used to prepare them.

The present invention relates to vulcanizable rubbery mixtures comprising a polyamide, a partially hydrogenated nitrile rubber, and curatives for the partially hydrogenated nitrile rubber.

Background of the Invention

Polyamides are well known articles of commerce. They are described, for example, in Encyclopedia of Chemical Technology, Othmer et al editors, third edition (1978). Polyamides typically exhibit high inherent strength properties.

Partially hydrogenated nitrile rubber is produced by the selective hydrogenation of the carbon-carbon double bond unsaturation in a base copolymer rubber of a $C_{3 \text{ to } 5}$ $\alpha,\beta$ unsaturated nitrile and a $C_{4 \text{ to } 6}$ conjugated diene. The selective hydrogenation of nitrile rubber is described in U.S. patent 4,503,196 and U.S. patent 4,581,417. Peroxide vulcanizates of partially hydrogenated nitrile rubber typically exhibit very good strength properties.

Blends of non-hydrogenated nitrile rubber and polyamides are known. U.S. patent 4,508,867 discloses a blend containing carboxylated nitrile rubber, polyamide and specified non-polymeric additives.

Blends of partially hydrogenated nitrile rubber with other polymers have also been developed. For example, U.S. 4,576,992 and U.S. 4,405,756 both disclose a blend of partially hydrogenated nitrile rubber with ethylene-propylene copolymer rubber.

R.G.C.P., Vol. 48, No 11, 1971; F.S.TOLSTUK HINA and N.N.KOLESNIKOVA, pages 1239 to 1242 disclose properties of a vulcanisable rubber mixture comprising a butadiene acrylonitrile copolymer and the polyamide 548.

SUMMARY OF THE INVENTION

It has been surprisingly found that rubbery compositions with good physical properties may be obtained by vulcanizing a composition containing from 45 to 80 parts by weight of partially hydrogenated nitrile rubber and from 55 to 20 parts by weight polyamide.

The present invention provides a vulcanizable rubbery composition comprising:
(a) from 45 to 80 parts by weight of a partially hydrogenated rubbery copolymer of a $C_{3 \text{ to } 5}$ $\alpha,\beta$ unsaturated nitrile and a $C_{4 \text{ to } 6}$ conjugated diene having no more than 10 mole per cent carbon-carbon double bond unsaturation, and correspondingly
(b) from 55 to 20 parts by weight of a polyamide, and
(c) curative for said partially hydrogenated rubbery copolymer.
There is also provided a process to prepare a vulcanizable rubbery composition, the process consisting of:
(i) forming a rubber compound by adding to a rubber mixer and mixing a partially hydrogenated nitrile rubber having no more that 10 mole per cent unsaturation with curative for said partially hydrogenated rubbery copolymer, said mixing being completed below the activation temperature of the curative
(ii) removing said rubber compound from said rubber mixer,
(iii) adding a polyamide to a heated polymer mixer and mixing to form melted polyamide,
(iv) further adding to said heated polymer mixer a quantity of said rubber compound, such that said heated polymer mixer contains from 80 to 45 parts by weight of said partially hydrogenated nitrile rubber and correspondingly, for a combined total of 100 parts by weight, from 20 to 55 parts by weight of said melted polyamide, and
(v) mixing said rubbery compound and said melted polyamide until they are essentially homogenous.

DETAILED DESCRIPTION

The partially hydrogenated nitrile rubber which is used in this invention is produced by the selective hydrogenation of the carbon-carbon double bonds in a base copolymer rubber of a $C_{3 \text{ to } 5}$ $\alpha,\beta$ unsaturated nitrile, for example, acrylonitrile and a $C_{4 \text{ to } 6}$ conjugated diene, for example, butadiene. For convenience, the term "nitrile rubber" is used herein to refer to a copolymer of a $C_{3\ to}$ $\alpha$, $\beta$ unsaturated nitrile and a $C_{4\ to\ 6}$ conjugated diene. Examples of suitable nitrile rubber for hydrogenation include, but are not limited to, isoprene-butadiene acrylonitrile rubber, methacrylonitrile-butadiene rubber and acrylonitrile-butadiene rubber. The preferred nitrile rubber is acrylonitrile-butadiene rubber, which is typically referred to as NBR. NBR may be produced by the well known free radical emulsion polymerization process.

NBR contains from 18 to 50 weight per cent bound acrylonitrile units, with the balance being bound butadiene units. Preferred NBR copolymers contain from 32 to 38 weight per cent bound acrylonitrile units. One or more $\alpha,\beta$ unsaturated carboxylic acids selected from fumaric, itaconic, methacrylic, acrylic and maleic may optionally be employed as an additional co-monomer during the polymerization of an acrylonitrile-butadiene rubber. When employed, the amount of $\alpha,\beta$ unsaturated carboxylic acid is from 0.5 to 15 weight per cent of the monomer mixture.

Thus, nitrile rubber contains carbon-carbon double bond unsaturation and carbon-nitrogen triple bond unsaturation. The partially hydrogenated nitrile rubber which is used in present invention is prepared by the selective hydrogenation of nitrile rubber, such that the carbon-carbon double bonds are preferentially reduced.

The selective hydrogenation of nitrile rubber is typically completed in solution, using a hydrogenation catalyst, as described in U.S. 4,503,196 and U.S. 4,581,417.

Partially hydrogenated nitrile rubber is typically characterized by the amount of residual carbon-carbon double bond unsaturation. As used herein, the term "partially hydrogenated" refers to a hydrogenated rubber having no more than 10 mole per cent residual carbon-carbon double bond unsaturation.

The partially hydrogenated nitrile rubber employed in the present invention is a rubbery solid having a Mooney viscosity ($M_{L\ 1+4}$ at 100°C) of from 30 to 100.

The crystalline polyamide preferably used in this invention, also referred to as nylon, is a high molecular weight solid polymer having recurring amide groups within the polymer. Such polyamides are well known and may be prepared by polymerization of one or more epsilon-lactams or amino acids or by condensation of one or more dibasic acids and one or more diamines. Examples of suitable polyamides include but are not limited to nylon 6 (polycaprolactam), nylon 12 (polylauryllactam), nylon 6, 6 (polyhexamethylemeadipamide), nylon 6, 10 (polyhexamethylenesebacamide), nylon 11 (condensation product of 11 - amino-undecanoic acid) and mixtures thereof. The majority of such nylons have a melting point between 160°C and 230°C.

The use of a nylon having a comparatively low melting point, such as nylon 12, facilitates mixing and hence is preferred. The compositions of the present invention may also contain more than one nylon.

The compositions of the present invention contain conventional curatives for the partially hydrogenated nitrile rubber. Suitable curative include peroxides, sulphur-based curatives and reactive formaldehyde resin curatives. The compositions of the present invention preferably contain from 1 to 10 weight per cent, especially from 1 to 3 weight percent, of a peroxide vulcanization agent, based on the weight of the partially hydrogenated nitrile rubber. Any conventional peroxide curing agent may be employed, including dicumyl peroxide; tertiary butyl peroxy benzoate; cumene hydroperoxide; 2, 5, dimethyl-2, 5 di(benzoyl peroxy) hexane and benzoyl peroxide. Vulcanization coagents may also be used. Examples of such coagents are triethylene glycol dimethacrylate; trialkyl cyanurate; trialkyl phosphate; ethylene dimethyacrylate; 1, 2 polybutadiene; zinc acrylate and tertrahydrofurfuryl methacrylate. When employed, the amount of coagent is from 2 to 20 weight per cent (preferably from 5 to 10 weight per cent), based on the weight of the partially hydrogenated nitrile rubber.

Sulphur curatives may also be employed as curatives for the partially hydrogenated nitrile rubber. Exemplary sulphur curatives include thiurams, dithiocarbamates, sulfenamides, thiazoles, morpholines, bis-(3-(triethyloxy silyl) propyl) tetrasulfide and mixtures thereof. Elemental sulphur may be used in conjunction with said sulphur curatives. Further details regarding sulphur curatives for partially hydrogenated nitrile rubber are provided in Canadian Patent 1,227,597.

Reactive phenol formaldehyde resin curatives are also suitable as curatives for the partially hydrogenated nitrile rubber. Such resins are commercially available products which are typically prepared by reacting a para-substituted phenol with a molar excess of formaldehyde.

A Lewis acid activator is an essential component of a reactive phenol formaldehyde resin curative. The Lewis acid may be used as a separate component, such as Stannous chloride ($SnCl_2$) or polychlorobutadiene. Alternatively, the Lewis acid activator may itself be included in the structure of the resin curative - for example, bromomethylated alkyl phenol-formaldehyde rsein.

The amount of reactive phenol formaldehyde resin curative which is used is from 3 to 20 (preferably from 8 to 16) parts by weight per 100 parts by weight partially hydrogenated nitrile rubber.

Examples of commercially available reactive phenol formaldehyde resin curatives which are suitable for use in the present invention include those sold under the tradenames SP1045 and SP1055 by Schenectady Chemicals.

The compositions of the present invention may be prepared with conventional mixing equipment. It is highly preferred to utilize a two stage mixing process, wherein a partially hydrogenated nitrile rubber is compounded with peroxide in the first stage and the compound is subsequently mixed with the polyamide in the second stage.

In the first stage, a rubber compound is prepared by mixing partially hydrogenated nitrile rubber with from 1 to 10 weight per cent of a peroxide curative. The first stage mixing is completed at a temperature below the activation temperature of the peroxide curative, using any suitable rubber mixing equipment, such as a simple mill mixer, or an internal mixer.

The prepared rubber compound is then mixed with the polyamide in the second stage of the process. The second stage mixing is completed using polymer mixing equipment which is suitable for mixing polyamide and rubber. The polymer mixing equipment used in the second stage may be the same as, or different from, the rubber mixing equipment used in tile first stage. A preferred example of polymer mixing equipment is an internal mixer equipped with temperature controlled heating elements. Such internal mixers are well know and widely available.

The composition may optionally contain further additives such as fillers, reinforcing agents, plasticizers, antioxidants, and stabilizers. In a preferred embodiment, the composition includes an anhydride additive selected from maleic and succinic anhydride. While not wishing to be bound by any theories, it is believed that the anhydride additive improves the mixing between the nylon and the rubber compound by improving the miscibility of the two polymer components.

The final compositions contain from 80 to 45 parts by weight partially hydrogenated nitrile rubber and, correspondingly, 20 to 55 parts by weight polyamide. The compositions exhibit surprising rubbery properties, such as good compression set. Compositions containing from 50 to 70 parts partially hydrogenated nitrile rubber are preferred.

Compositions containing more than 60 weight per cent nylon might also exhibit useful characteristics, particularly if the rubber is dispersed throughout the nylon in small particles of less than 10 $\mu$m (microns) size. However, the outward physical appearance of such compositions is that of a plastic, and such plastic compositions are not encompassed by the present invention.

The compositions of the present invention are particularly suitable for preparing molded or extruded rubbery goods, such as hoses or seals.

The invention is further illustrated by the following examples, in which all parts and percentages are by weight unless noted otherwise.

EXAMPLE 1

The partially hydrogenated nitrile rubber used in this example was prepared from an acrylonitrile-butadiene copolymer rubber having a bound acrylonitrile content of about 34%. The rubber was selectively hydrogenated according to a procedure generally described in U.S. patent 4,503,196 such that the remaining carbon-carbon double bond unsaturation was less than 1 mole per cent. The partially hydrogenated nitrile rubber is denoted HNBR in Table 1.

The polyamide was a nylon 12 having a melting point of 176 - 180°C, sold under the tradename Grilamid L20G by Emser. It is denoted as nylon 12 in Table 1.

The ingredients shown in Table 1 were mixed as follows. The partially hydrogenated nitrile rubber was added to a room temperature mill. The additives indicated in Table 1 except nylon, were then added to the rubber. The rubber compound was thoroughly mixed for several minutes before being removed from the mill.

A Haake internal mixer fitted with a mixing head and roller blade rotors was used in the second stage mixing to mix the nylon with the rubber compound. The mixer was pre-heated to between 195 and 200°C, at which time only the nylon was placed in the mixing chamber. After the nylon melted, the rubber compound was gradually added to the mixer over a period of from 3 to 5 minutes. Mixing was continued for a further period of 5 to 7 minutes. The mixture was judged to be quite homogeneously mixed when a plateau (i.e. an essentially constant value for a period of 4 minutes) was observed in the torque reading of the internal mixer.

The second stage mixing temperature was sufficiently high that some in situ vulcanization, "dynamic vulcanization", may have taken place.

The resulting composition was then discharged from the internal mixer and passed once through a mill mixer at room temperature.

Test specimens were cut from sheets which were compression molded at 200°C for 20 minutes. Elongation at break, tensile strength and modulus measurements were completed on the test specimens according to ASTM D 412. The compositions exhibit excellent heat stability in that they are not discoloured by the heat required to mix them.

Comparative experiment B was completed without peroxide, resulting in comparatively low tensile strength and modulus properities.

Comparative experiments H and I were completed with a non-hydrogenated acrylontrile-butadiene rubber (NBR) having an acrylonitrile content of about 34%. The compositions were grossly discolored during the second stage mixing process, and were not evaluated further.

## TABLE 1

| INGREDIENT | A | B (c) | C | D | E | F | G | H (c) | I (c) |
|---|---|---|---|---|---|---|---|---|---|
| HNBR (parts) | 70 | 70 | 70 | 70 | 50 | 50 | 80 | 0 | 0 |
| NYLON 12 (parts) | 30 | 30 | 30 | 30 | 50 | 50 | 20 | 50 | 25 |
| DCP[1] (phr)[2] | 7 | -- | 7 | 10 | 10 | 10 | 7 | | -- |
| NBR (parts) | -- | -- | -- | -- | -- | -- | -- | 50 | 75 |
| MA[3] (parts) | -- | -- | 5 | -- | -- | -- | -- | -- | -- |

### PHYSICAL PROPERTIES

| | A | B | C | D | E | F | G | H | I |
|---|---|---|---|---|---|---|---|---|---|
| 100% Modulus (MPa) | 6.7 | 0.7 | 6.6 | 7.0 | 13.3 | 14.1 | 4.6 | n.m. | n.m. |
| Tensile at Break (MPa) | 8.2 | 3.1 | 12.9 | 7.9 | 18.1 | 13.3 | 9.8 | n.m. | n.m. |
| Elongation at Break (%) | 220 | 1000 | 320 | 150 | 230 | 100 | 280 | n.m. | n.m. |
| Compression Set (%) | 79.6 | 104 | 81.8 | 70.5 | 77.1 | 82.6 | 74.2 | n.m. | n.m. |

Notes:
1. DCP = dicumyl peroxide
2. phr = parts per 100 parts HNBR
3. MA = maleic anhydride
   n.m. = not measured
   c = comparative

EXAMPLE 2

This example illustrates an inventive composition which was prepared with sulphur curatives. The partially hydrogenated nitrile rubber and polyamide used in this example had the same physical characterics as those used in example 1.

The partially hydrogenated nitrile rubber was mixed on a room temperature mill with the sulphur curatives shown in Table 2, exclusive of the nylon, for a period of about 5 minutes. The resulting rubber compound was then removed from the mill.

The rubber compound was subsequently mixed with the nylon in a Haake internal mixer, using the procedure generally described in Example I.

Again, the rubber compound was added to the melted nylon at a temperature of from 195 to 200°C over a period of about 5 minutes. Mixing of the rubber compound and nylon was then continued for a further period of about 7 minutes.

The composition was discharged from the mixer and observed to be not discolored.

Test specimens were prepared, and physical properties measured, as described in Example 1. The inventive composition of this example exhibits excellent strength properties.

## TABLE 2

| | |
|---|---|
| HNBR (parts) | 100 |
| NYLON (parts) | 100 |
| sulphur | 0.44 |
| TMTD | 2.5 |
| CBS | 2.0 |
| HVA-2 | 2.0 |

## Physical Properties

| | | |
|---|---|---|
| 100% modulus | (MPa) | 16.9 |
| Tensile at Break | (MPa) | 25.1 |
| Elongation | (%) | 270 |

notes:    TMTD = Mixed tetra $C_1$ to $_2$-alkyl thiuram disulfide

CBS  = N-cyclohexyl-2-benzothiazyl sulfenamide

HVA-2  = $N,N_1$-m-phenylenedimaleimide

## Example 3

The partially hydrogenated nitrile rubber used in the experiments of the example was prepared from an acrylonitrile-butadiene rubber having an acrylonitrile content of about 34%, and was selectively hydrogenated according to a procedure generally described in U.S. patent 4,503,196 until the remaining carbon-carbon double bond unsaturation was about 5 mole per cent.

The polyamide used in inventive experiments 31 to 33 and comparative experiment 35 was a nylon 12 having a melting point of 176-180°C, sold under the tradename Grilamid L20G by Emser. The polyamide used in inventive experiment 34 was a nylon 6 sold under the tradename Grilon A23 by Emser.

Inventive experiments 31 to 34 were completed as follows. The partially hydrogenated nitrile rubber was first compounded on a room temperature mill with 3.5 parts dicumyl peroxide per 100 parts partially hydrogenated nitrile rubber. The compound was throughly mixed for several minutes before being finally removed from the mill.

A Haake internal mixer fitted with a mixing head and roller blade rotors was used in the second stage mixing. The mixer was heated to a temperature of about 190°C for experiments 31 to 33 (which employed nylon 12) and a temperature of about 230°C for experiment 34 (which employed nylon 6). The rubber compound was then added to the heated mixer and mixed for about 4 minutes, at which time the nylon was added. The mixing was continued for a further five minutes, at which time an increment of dicumyl peroxide was added to the mixer in an amount sufficient to provide a further 3.5 parts dicumyl peroxide per 100 parts partially hydrogenated nitrile rubber. Mixing was continued for a further 4.5 minutes, followed by the addition of 0.5 parts zinc dibutyl dithiocarbamate (a free radical scavenger) per 100 parts partially hydrogenated nitrile rubber and 0.5 parts of an epoxidized soya bean oil plasticizer (sold under the name Paraplex® 62) per 100 parts partially hydrogenated nitrile rubber. The final composition was then dumped from the mixer after about 4.5 minutes of additional mixing.

Physical properties of the inventive compositions of experiments 31 to 34 are shown in Table 3.

Table 3 also provides comparative data relating to the physical properties of a composition prepared without curatives (experiment 35). The composition of comparative experiment 35 was prepared by adding the partially hydrogenated nitrile rubber to the above described Haake internal mixer (pre heated to a temperature of about 190°C) and mixing for about 4 minutes, followed by the addition of the nylon 12 and mixing for a further period of about 14.5 minutes.

## TABLE 3

| Ingredient | Experiment | | | | |
|---|---|---|---|---|---|
| | 31 | 32 | 33 | 34 | 35 (c) |
| HNBR (parts) | 50 | 75 | 90 | 75 | 75 |
| Nylon 12 (parts) | 50 | 25 | 10 | - | 25 |
| Nylon 6 (parts) | - | - | - | 25 | - |
| DCP[1] (phr) | 7 | 7 | 7 | 7 | - |
| ZDTC[3] (phr) | 0.5 | 0.5 | 0.5 | 0.5 | - |
| ESBO[4] (phr) | 0.5 | 0.5 | 0.5 | 0.5 | - |
| **Physical Properties** | | | | | |
| 100% Modulus (MPa) | 13.0 | 5.7 | 2.2 | 4.1 | 1.7 |
| Tensile (MPa) | 13.6 | 16.2 | 6.7 | 5.0 | 6.4 |
| Elongation (%) | 105 | 340 | 305 | 180 | 800 |

Notes:
1. DCP = dicumyl peroxide
2. phr. = parts per hundred parts HNBR
3. ZDTC = zinc dibutyl dithiocarbamate
4. ESBO = epoxidized soya bean oil
   c = comparative

## Claims

1. A vulcanizable rubbery composition comprising:
   (a) from 45 to 80 parts by weight of partially hydrogenated rubbery copolymer of a $C_{3\ to\ 5}$ $\alpha,\beta$ unsaturated nitrile and a $C_{4\ to\ 6}$ conjugated diene having no more 10 mole per cent carbon-carbon double bond unsaturation and correspondingly,
   (b) from 55 to 20 parts by weight of polyamide, and
   (c) curative for said partially hydrogenated rubbery copolymer.

2. The composition of Claim 1 wherein said nitrile is acrylonitrile and said diene is butadiene.

9

3. The composition of Claim 1 wherein said rubbery copolymer contains from 32 to 38 weight per cent bound acrylonitrile units.

4. The composition of Claim 1 wherein said polyamide is nylon 12.

5. The composition of Claim 1 which further comprises additives selected from antioxidants, stabilizers, maleic anhydride and fillers.

6. The composition of Claim 1 wherein said curatives comprises from 1 to 10 weight per cent of a peroxide curative system, based on the weight of said partially hydrogenated rubbery copolymer.

7. A process to prepare a vulcanizable rubbery composition, said process consisting of:
   (i) forming a rubber compound by adding to a rubber mixer and mixing a partially hydrogenated rubbery copolymer of a $C_{3 \text{ to } 5}\alpha,\beta$ unsaturated nitrile and a $C_{4 \text{ to } 6}$ conjugated diene having no more than 10 mole per cent unsaturation with curative for said partially hydrogenated rubbery copolymer, said mixing being completed below the activation temperature of the curative,
   (ii) removing said rubber compound from said rubber mixer
   (iii) adding a polyamide to a heated polymer mixer and mixing to form melted polyamide,
   (iv) further adding to said heated polymer mixer a quantity of said rubber compound, such that said heated polymer mixer contains from 80 to 45 parts by weight of said partially hydrogenated nitrile rubber and correspondingly, for a combined total of 100 parts by weight, from 20 to 55 parts by weight of said melted polyamide, and
   (v) mixing said rubbery compound and said melted polyamide until they are essentially homogeneous.

8. The process of Claim 7 wherein said nitrile is acrylonitrile and said diene is butadiene.

9. The process of Claim 7 wherein said rubbery copolymer contains from 32 to 38 weight per cent bound acrylonitrile units.

10. The process of Claim 7 wherein said polyamide is nylon 12.

11. The process of Claim 7 wherein said curatives consist of from 1 to 10 weight per cent of a peroxide, based on the weight of said partially hydrogenated rubbery copolymer.

12. The process of Claim 11 wherein said curative consist of from 1 to 10 weight per cent of a peroxide plus from 2 to 20 weight per cent of a vulcanization coagent, based on the weight of said partially hydrogenated nitrile rubber.

**Patentansprüche**

1. Vulkanisierbare kautschukartige Zusammensetzung, umfassend
   (a) 45 bis 80 Gew.-Teile eines partiell hydrierten kautschukartigen Copolymers aus einem $\alpha,\beta$-ungesättigten $C_{3-5}$-Nitril und einem konjugierten $C_{4-6}$-Dien mit nicht mehr als 10 Mol-% Kohlenstoff-Kohlenstoff-Doppelbindungs-Nichtsättigung und entsprechend
   (b) 55 bis 20 Gew.-Teile eines Polyamids und
   (c) ein Härtungsmittel für das partiell hydrierte kautschukartige Copolymer.

2. Zusammensetzung nach Anspruch 1, worin das Nitril Acrylnitril ist und das Dien Butadien ist.

3. Zusammensetzung nach Anspruch 1, worin das kautschukartige Copolymer 32 bis 38 Gew.-% gebundene Acrylnitril-Einheiten enthält.

4. Zusammensetzung nach Anspruch 1, worin das Polyamid Nylon 12 ist.

5. Zusammensetzung nach Anspruch 1, die weiterhin Additive umfaßt, die aus Antioxidationsmitteln, Stabilisatoren, Maleinsäureanhydrid und Füllstoffen augewählt sind.

**6.** Zusammensetzung nach Anspruch 1, worin das Härtungsmittel 1 bis 10 Gew.-% eines Peroxid-Härtungsmittel-Systems umfaßt, bezogen auf das Gewicht des partiell hydrierten kautschukartigen Copolymers.

**7.** Verfahren zur Herstellung einer vulkanisierbaren kautschukartigen Zusammensetzung, wobei das Verfahren besteht aus

(i) dem Bilden eines Kautschuk-Compounds durch Eintragen eines partiell hydrierten kautschukartigen Copolymers aus einem $\alpha,\beta$-ungesättigten $C_{3-5}$-Nitril und einem konjugierten $C_{4-6}$-Dien mit nicht mehr als 10 Mol-% Kohlenstoff-Kohlenstoff-Doppelbindungs-Nichtsättigung in einen Kautschuk-Mischer und Vermischen des Copolymers mit einem Härtungsmittel für das partiell hydrierte kautschukartige Copolymer, wobei das Vermischen unterhalb der Aktivierungstemperatur des Härtungmittels vervollständigt wird,

(ii) dem Austragen des Kautschuk-Compounds aus dem Kautschuk-Mischer,

(iii) dem Eintragen eines Polyamids in einen erhitzten Polymer-Mischer und das Vermischen, um das geschmolzenes Polyamid zu erhalten,

(iv) weiterhin dem Hinzufügen einer solchen Menge des Kautschuk-Compounds in den erhitzten Polymer-Mischer, daß der erhitzte Polymer-Mischer 80 bis 45 Gew.-Teile des partiell hydrierten Nitril-Kautschuks und, entsprechend für eine kombinierte Gesamtmenge von 100 Gew.-Teilen, 20 bis 55 Gew.-Teile des geschmolzenen Polyamids enthält, und

(v) dem Vermischen der kautschukartigen Verbindung und des geschmolzenen Polyamids, bis sie im wesentlichen homogen sind.

**8.** Verfahren nach Anspruch 7, worin das Nitril Acrylnitril ist und das Dien Butadien ist.

**9.** Verfahren nach Anspruch 7, worin das kautschukartige Copolymer 32 bis 38 Gew.-% gebundene Acrylnitril-Einheiten enthält.

**10.** Verfahren nach Anspruch 7, worin das Polyamid Nylon 12 ist.

**11.** Verfahren nach Anspruch 7, worin das Härtungsmittel aus 1 bis 10 Gew.-% eines Peroxids, bezogen auf das Gewicht des partiell hydrierten kautschukartigen Copolymers, besteht.

**12.** Verfahren nach Anspruch 11, worin das Härtungsmittel aus 1 bis 10 Gew.-% eines Peroxids plus 2 bis 20 Gew.-% eines Vulkanisations-Hilfsmittels, bezogen auf das Gewicht des partiell hydrierten Nitril-Kautschuks, besteht.

**Revendications**

**1.** Composition caoutchouteuse vulcanisable comprenant :

(a) 45 à 80 parties en poids d'un copolymère caoutchouteux partiellement hydrogéné d'un nitrile $\alpha,\beta$-insaturé en $C_3$ à $C_5$ et d'un diène conjugué en $C_4$ à $C_6$ ne possédant pas plus de 10 moles % d'insaturation par double liaison carbone-carbone et, proportionnellement,

(b) 55 à 20 parties en poids d'un polyamide, et

(c) une formulation de vulcanisation pour ledit copolymère caoutchouteux partiellement hydrogéné.

**2.** Composition suivant la revendication 1, dans laquelle le nitrile est l'acrylonitrile et le diène est le butadiène.

**3.** Composition suivant la revendication 1, dans laquelle le copolymère caoutchouteux contient 32 à 38 % en poids de motifs acrylonitrile liés.

**4.** Composition suivant la revendication 1, dans laquelle le polyamide est le Nylon 12.

**5.** Composition suivant la revendication 1, qui comprend en outre des additifs choisis entre des antioxydants, des stabilisants, l'anhydride maléique et des charges.

**6.** Composition suivant la revendication 1, dans laquelle la formulation de vulcanisation comprend 1 à 10 % en poids d'un agent de vulcanisation du type peroxyde, sur la base du poids du copolymère

11

caoutchouteux partiellement hydrogéné.

7. Procédé de préparation d'une composition caoutchouteuse vulcanisable, ledit procédé consistant en :

(i) la formation d'un caoutchouc par introduction dans un mélangeur de caoutchouc et par mélange d'un copolymère caoutchouteux partiellement hydrogéné d'un nitrile $\alpha,\beta$-insaturé en $C_3$ à $C_5$ et d'un diène conjugué en $C_4$ à $C_6$ ne comprenant pas plus de 10 moles % d'insaturation avec une formulation de vulcanisation pour ledit copolymère caoutchouteux partiellement hydrogéné, ledit mélange étant achevé à une température inférieure à la température d'activation de la formulation de vulcanisation,

(ii) l'enlèvement du caoutchouc dudit mélangeur de caoutchouc,

(iii) l'introduction d'un polyamide dans un mélangeur chauffé pour polymères et le mélange pour former un polyamide fondu,

(iv) l'introduction supplémentaire dans ledit mélangeur chauffé pour polymères d'une quantité dudit caoutchouc, telle que ledit mélangeur chauffé pour polymères contienne 80 à 45 parties en poids du caoutchouc nitrile partiellement hydrogéné et, proportionnellement, pour une masse totale de 100 parties en poids, 20 à 55 parties en poids dudit polyamide fondu, et

(v) le mélange dudit composé caoutchouteux et dudit polyamide fondu jusqu'à obtention d'un mélange pratiquement homogène.

8. Procédé suivant la revendication 7, dans lequel le nitrile et l'acrylonitrile et le diène est le butadiène.

9. Procédé suivant la revendication 7, dans lequel le copolymère caoutchouteux contient 32 à 38 % en poids de motifs acrylonitrile liés.

10. Procédé suivant la revendication 7, dans lequel le polyamide est le Nylon 12.

11. Procédé suivant la revendication 7, dans lequel la formulation de vulcanisation consiste en une quantité de 1 à 10 % en poids d'un peroxyde, sur la base du poids du copolymère caoutchouteux partiellement hydrogéné.

12. Procédé suivant la revendication 11, dans lequel la formulation de vulcanisation consiste en une quantité de 1 à 10 % en poids d'un peroxyde plus 2 à 20 % en poids d'un co-agent de vulcanisation, sur la base du poids du caoutchouc nitrile partiellement hydrogéné.